Europäisches Patentamt

European Patent Office

Office européen des brevets

(19)

(11) Veröffentlichungsnummer : **0 441 935 B1**

(12)                   # EUROPÄISCHE PATENTSCHRIFT

(45) Veröffentlichungstag der Patentschrift :
**18.11.93 Patentblatt 93/46**

(51) Int. Cl.$^5$ : **B44C 1/10, B44C 1/17**

(21) Anmeldenummer : **90913115.3**

(22) Anmeldetag : **30.08.90**

(86) Internationale Anmeldenummer :
**PCT/DE90/00662**

(87) Internationale Veröffentlichungsnummer :
**WO 91/03381 21.03.91 Gazette 91/07**

(54) **SELBSTKLEBENDES ANREIBEBILD SOWIE DIE VERFAHREN ZU SEINER HERSTELLUNG UND ZU SEINER ANWENDUNG.**

(30) Priorität : **31.08.89 PCT/DE89/00568**

(43) Veröffentlichungstag der Anmeldung :
**21.08.91 Patentblatt 91/34**

(45) Bekanntmachung des Hinweises auf die
Patenterteilung :
**18.11.93 Patentblatt 93/46**

(84) Benannte Vertragsstaaten :
**AT BE CH DE DK ES FR GB IT LI LU NL SE**

(56) Entgegenhaltungen :
**EP-A- 0 043 578**
**EP-A- 0 189 112**
**EP-A- 0 213 327**
**AT-B- 347 483**
**US-A- 2 647 849**

(73) Patentinhaber : **EISSELE, Juergen**
**Alte Esslinger Strasse 13**
**D-71394 Kernen (DE)**

(72) Erfinder : **EISSELE, Juergen**
**Alte Esslinger Strasse 13**
**D-71394 Kernen (DE)**

**Beschreibung**

Die Erfindung betrifft ein selbstklebendes Anreibebild aus einem Schutzpapier, einer Kleberschicht, einer oder mehreren Farbschichten und einem Trägerpapier oder einem kombinierten Träger- und Schutzpapier, das auf seiner Rückseite auch die Schutzpapierfunktion wahrnimmt, wobei die Farb- und Kleberschichten in der Flächenform und Ausdehnung des Bildes oder der Abbildung auf das Trägerpapier aufgebracht sind und die Farb- und Kleberschichten untereinander deckungsgleich mit der durch die Farbschicht(en) dargestellten Abbildung sind und wobei Farb- und Kleberschicht(en) auch kombiniert vorliegen können, nämlich als farbige Kleberschicht bzw. klebrige Farbschicht, sowie die Verfahren zu seiner Herstellung und zu seiner Anwendung.

Solche Anreibebilder sind bereits in der EP-A-0043 578 und in der AT-B-347 483 beschrieben, wobei die zuerst genannte Anreibebilder zeigt, bei welchen auf ein oder mehrere Silikonpapiere zwei, drei oder mehr Schichten aus gegebenenfalls zuerst Trägerlack und dann mindestens einer Farbe sowie einem Kleber aufgedruckt werden und obendrauf ein oder mehrere Deckpapiere gelegt werden. Der Schichtenauftrag sei auch in umgekehrter Folge möglich. Nähere Angaben über die Art der Silikonpapiere und der verschiedenen Beschichtungsmaterialien werden nicht gemacht, und es hat sich gezeigt, dass ohne eine ganz bestimmte und spezifische Auswahl hinsichtlich der im Anreibebild verwendeten Materialien eine erfolgreiche Herstellung und Anwendung nicht möglich ist.

Die AT-B-347483 zeigt ein Verfahren zur Herstellung von Buchstaben und Zeichen für Kranzschleifen-Beschriftungen in Form eines Anreibebildes aus Silikon- oder fettgestrichenem Trägerpapier im Siebdruckverfahren, indem zuerst ein transparenter Schutzlack, dann eine Farbschicht und zuletzt eine Kleberschicht aufgebracht werden, die schliesslich mit einem Silikon- oder Fettpapier abgedeckt werden.

Ähnliche Anreibebilder, bestehend aus mindestens einer Deckpapierschicht, mindestens einer Kleberschicht, mindestens einer Farbschicht, ggfs. einer Trägerlackschicht und mindestens einer Silikonpapierschicht, sind auch in der US-A-2647849 beschrieben. Die Anreibebilder werden in Form von Symbolen, Buchstaben oder dergleichen aus einer Rolle oder aus einem Stapel mehrfach übereinanderliegend herausgeschnitten, gestanzt oder gesägt. Ferner sagt sie Schrift nicht, wie die jeweiligen Haftkräfte zwischen den einzelnen Schichten der Anreibebilder und zwischen den Anreibebildern selbst einzustellen sind. Einerseits ist erforderlich, dass die einzelnen Anreibebilder im Stapel aneinander verhaften, damit der Stapel durch Schneiden, Stanzen oder Sägen bearbeitet werden kann. Andererseits muss die Farbschicht auf dem Trägerpapier beim Ablösen eines darüberliegenden Anreibebildes vollständig haften bleiben. Ausserdem müssen die Haftkräfte zwischen Farbschicht und Trägerpapier sowie der darunter folgenden Kleberschicht so eingestellt sein, dass man das Trägerpapier von der auf der Oberfläche haftenden Kleberschicht des Anreibebildes, ohne dieses zu beschädigen, ablösen kann.

Aus diesem Stand der Technik ist nicht zu entnehmen, wie die Schichten speziell zusammengesetzt sein müssen, um optimale Herstellungs-, Handhabungs-, Lagerungs- und Abzieheigenschaften zu haben, welche die Anwendung des Anreibebildes auch in feuchtheissen Klimata oder unter nordisch-kalten Wintertemperaturen gewährleisten, um mit dem Anreibebild vorzugsweise an Schaufenstern, aber auch an anderen Untergrundmaterialien mit bis zu mässig grober oder textiler Oberfläche dekorative Abbildungen oder Markierungszeichen, was auch Buchstaben oder Piktogramme sein können, anzubringen.

Aus der EP-A-0213327 geht ein übertragbarer Lackfilm hervor, der aus einer Lackschicht und einer Klebstoffschicht bestehen kann. Hierzu ist auf der ersten mit einer Silikonschicht versehenen Seite eines bahnartigen Trägerfilms eine Klebstoffschicht aufgebracht, die gegebenenfalls zur Zwischenlagerung durch Abdecken mit einem mit einer Ablöseschicht versehenen Abdeckfilm und, wenn man diesen entfernt wieder hat, mit der Lackschicht versehen werden kann. Dieser Lackfilm ist zusammen mit der Klebstoffschicht von dem Trägerfilm ablösbar und kann auf eine Oberfläche aufgebracht werden. Auch die Rückseite des Trägerfilms kann mit einer Ablöseschicht aus Silikon versehen werden, um die Folie in mehreren Lagen oder aufgerollt lagern zu können. Es wird vorgeschlagen, dass Symbole, Zahlen und Buchstaben gegebenenfalls durch ein Stanzverfahren freigeschnitten werden können. Aus der Druckschrift geht hervor, dass der Trennwert der als Silikonschicht ausgebildeten Ablöseschicht des Abdeckfilms oder der Trennwert der zweiten Seite des Trägerfilms etwa ein Drittel so gross sein soll wie der Trennwert der die erste Seite des Trägerfilms bedeckenden und die Klebstoffschicht aufnehmenden Silikonschicht.

Die Aufgaben, die mit der Erfindung gelöst werden, bestehen darin,

o dass beliebige ein- oder mehrfarbige Abbildungen als Anreibebilder in beliebigen Mengen und Massen und in hohen Geschwindigkeiten hergestellt, in Stapeln oder auf Rollen gelagert, transportiert, einfach gehandhabt und schliesslich auf eine Vielzahl von Untergrundmaterialien angerieben werden können, ohne dass sich die Abbildungen bzw. Anreibebilder auf einem Folien- oder Filmmaterial befinden bzw. aus diesen herausgeschnitten, gestanzt oder gesägt werden müssen;

o dass für einen Betrachter der Anreibebilder keine nicht zu den Abbildungen gehörenden Ränder oder

2

Folien sichtbar sind;

o dass die Anreibebilder bei gewöhnlichen Witterungseinflüssen wie Sonne, Regen und Kälte sowie in unterschiedlichen Klimata auf den Untergrundmaterialien verbleiben, nicht reissen und sich den witterungs- und klimabedingten Veränderungen der Untergrundmaterialien elastisch anpassen;

o dass die Anreibebilder sowohl an der Aussenseite als auch an der Innenseite einer Glasscheibe, zum Beispiel eines Schaufensters, aufgebracht sein können und bei Tageslicht sowohl von aussen als auch vom Innenraum her gleich farbig erscheinen;

o dass die Anreibebilder von glatten Glasflächen leicht und rückstandslos wieder abgeschabt werden können;

o dass die Anreibebilder auf Endlosbahnen hergestellt und maschinell insbesondere auch auf runden, konvexen, konkaven oder unebenen Konsumgüter-Packungsbehältern angebracht werden können.

Diese Aufgaben werden gelöst durch einen an sich bekannten Schichtenaufbau, bei dem die Zusammensetzung der Schichten so gewählt wird, dass sich für die Träger- und Schutzpapiere bestimmte Schäl- und Trennwerte ergeben, die erst ein sicheres Funktionieren bei der massenweisen Herstellung, Lagerung und beim Transport sowie bei der Anwendung in unterschiedlichen klimatischen Verhältnissen, besonders aber hohe Produktionsgeschwindigkeiten sowie bestimmte Handhabungseigenschaften gewährleisten.

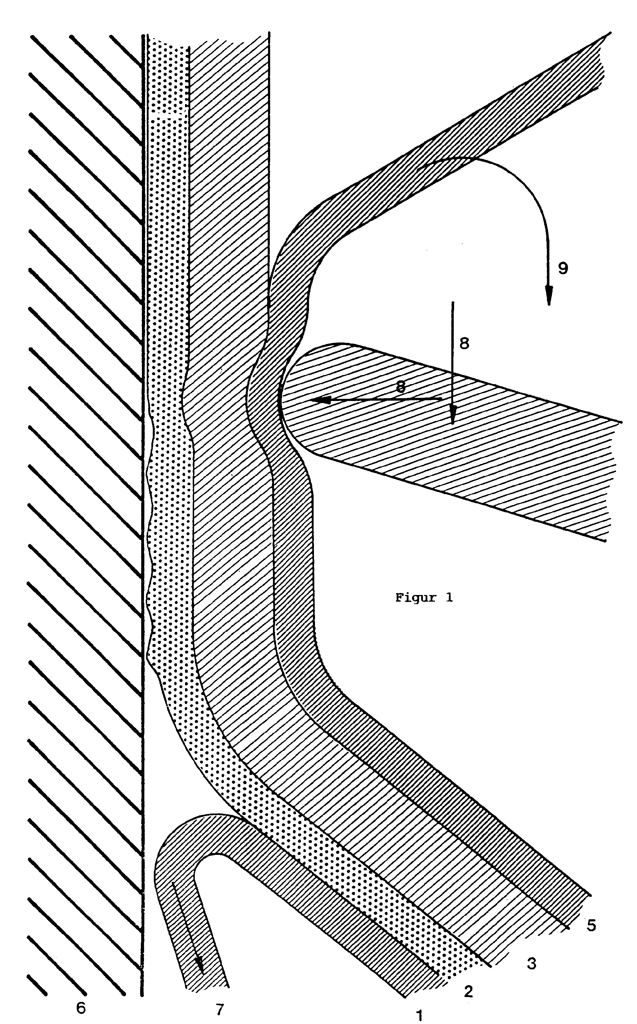

Die Erfindung ist, ausgehend von einem Anreibebild der eingangs beschriebenen Art, dadurch gekennzeichnet, dass das Trägerpapier (Ziffer 5 in Figur 1) einen Trennwert von 50 bis 80 cN, gemessen mit TESA-Band K7476, 20 mm Streifenbreite, Prüfung 24 Stunden bei 40°C, das Schutzpapier (Ziffer 1 in Figur 1) einen ebenso gemessenen Trennwert von 15 bis 35 cN aufweist, die Farbschicht mit einem Trennwert von ca. 8 bis 12 cN, gemessen mit TESA-Band T651, 20 mm Streifenbreite, Messbereich 2 N, Abzugsgeschwindigkeit 500 mm/min, am Trägerpapier haftet und die Klebekraft der, ggf. farbigen, Kleberschicht(en) bzw. klebrigen Farbschicht(en) so gewählt wird, dass das Schutzpapier daran selbsttätig und ausreichend verhaftet, es jedoch beim Abziehen die darunterliegenden Schichten nicht vom Trägerpapier abzieht.

Für die Farbschicht (Ziffer 3 in Figur 1) wird eine bunte, deckkräftige Farbe eingesetzt, die in einer physikalisch trocknenden Version in Geschwindigkeiten von mindestens 2.000 Bogen je Stunde und in einer ultrviolett härtbaren Version in Geschwindigkeiten von etwa 7.200 Bogen je Stunde auf ein silikonisiertes Trägerpapier (Ziffer 5 in Figur 1) in der Flächenform und -ausdehnung des Bildes oder der Abbildung aufgebracht wird und nach der Trocknung an dem Trägerpapier mit einem Trennwert von ca. 8 bis 12 cN, gemessen mit TESA-Band T651, 20 mm Streifenbreite, Messbereich 2 N, Abzugsgeschwindigkeit 500 mm/min, haftet. Nach dem Trocknungsvorgang muss die Elastizität der Farbschicht erhalten bleiben, gleichgültig, ob sie zum Beispiel im Siebdruck-, Offsetdruck- oder Sprühverfahren und in einer oder mehreren Schichten aufgebracht worden ist.

Als Farbschicht (Ziffer 3 in Figur 1) wird in der physikalisch trocknenden Version ein pastöses PVC-Mischpolymerisat mit organischen bzw. anorganischen Pigmenten sowie Estern, Ketonen und aromatischen Kohlenwasserstoffen als Lösemittel verwendet. Die deckkräftigen Pigmente weisen eine Lichtechtheit von 5-8 Wollskala (DIN 16525) auf. Dies erlaubt es, auf eine farbstabilisierende weisse Hintergrundfläche zu verzichten und bei Vier-Farb-Raster-Motiven den Weiss-Anteil ebenfalls aufzurastern und als fünfte Rasterfarbe aufzubringen. Damit erscheint dann das Motiv von vorn als auch, gegen Tages- oder Kunstlicht betrachtet, von der Rückseite her gleich farbig und nicht etwa, wie durch die sonst erforderliche farbstabilisierende Weissfläche bedingt, milchig-weiss und das Farbmotiv nur noch schemenhaft. Das PVC-Polymerisat kann durch Polyäthylen oder einen anderen, für den Anwendungszweck besser geeigneten Kunststoff ersetzt werden. In einer UV-härtbaren Version kann die Farbschicht (Ziffer 3 in Figur 1) aus einem pigmentierten Urethan-Acrylatharz-System bestehen.

Der Kleber ist in der Regel ein wässriger Dispersionskleber, der in der Form einer Kleberschicht (Ziffer 2 in Figur 1) vorzugsweise im Siebdruckverfahren und, abhängig von der Maschinen- und Fertigungsorganisation, in Geschwindigkeiten von mindestens 400 bis mindestens 2.000 Bogen je Stunde aufgebracht wird, wobei diese Kleberschicht über ihre ganze Fläche an dem anschliessend aufgelegten Silikon-Schutzpapier (Ziffer 1 in Figur 1) selbsttätig verhaftet, so dass das Schutzpapier nicht nur, wie bei EP-A-0043578, lose aufgelegt ist. Durch diese Neuerung werden die Attraktivität des Anreibebildes wesentlich erhöht sowie seine Lagerungs-, Transport- und Handhabungseigenschaften wesentlich erleichtert. Beim Abziehen löst sich das Schutzpapier (Ziffer 7 in Figur 1) wieder von der Kleberschicht, ohne dass der Aufbau des Anreibebildes aus den Schichten 2 und 3 in Figur 1 ganz oder teilweise am Schutzpapier hängenbleibt. Schliesslich ist die Kleberschicht (Ziffer 2 in Figur 1) extrem beständig gegen ultraviolette Strahlung aus Sonnen- und Kunstlicht, was dem Kleber für lange Zeit seine Elastizität und Wasserlöslichkeit und damit auch seine leichte Wiederablösbarkeit erhält. Ferner behält der Kleber seine volle Funktionsfähigkeit in einer Temperaturspanne von mindestens minus 30°C bis plus 100°C.

Die entscheidenden Fortschritte in der jetzigen Erfindung gegenüber EP-A-0043578 und AT-B-347483 liegen also darin, dass Materialien gefunden wurden, die hohe Verarbeitungsgeschwindigkeiten von jeweils mindestens 400 bzw. 2.000 und 7.200 Bogen pro Stunde und damit eine industrielle Fertigung sowie die Massenverwendung dieser Art Anreibebilder erlauben, ausserdem, dass sie jetzt in einer attraktiven vertriebs- und verkaufsfähigen Form, nämlich durch das selbsttätig an der Kleberschicht verhaftende Schutzpapier, vorliegen. Letzteres galt in Fachkreisen bis zur vorliegenden Erfindung für höchst gefährlich, ausserdem waren Produktionsgeschwindigkeiten von 100 bis 400 Bogen je Stunde Stand der Technik. Ferner können jetzt Bogenformate von 140 x 100 cm oder kleiner oder grösser in den hohen Geschwindigkeiten sicher verarbeitet werden.

Ein für den Markterfolg besonders entscheidender Fortschritt der Erfindung ist, dass im Gegensatz zum Stand der Technik nach AT-B-347483 auf den separaten Träger- oder Schutzlack verzichtet werden konnte, was bei einem einfarbigen Anreibebild 33% und bei einem vierfarbigen 20% des bisherigen Produktionsaufwandes einspart. Wesentlich ist ferner, dass nunmehr das Anreibebild von einer Glasscheibe, worauf es angerieben worden ist, auch nach langer Verweildauer von beispielsweise einem Jahr noch sehr leicht und als zusammenhängende Masse mit einem Klingenschaber wieder abgeschabt werden kann, wohingegen das früher nur mit hohem Kraftaufwand und in Staub zerbröselt möglich war. Auch war die Wasserlöslichkeit des Klebers je nach UV-Bestrahlung schon nach ein, zwei Monaten verlorengegangen. Ausser durch Abschaben kann das Anreibebild auch mit Hilfe eines Verdünners wieder entfernt werden. Insoweit muss natürlich zuerst geprüft werden, dass durch den Verdünner das Untergrundmaterial nicht beschädigt wird.

Erreicht werden die hohen Produktionsgeschwindigkeiten der Erfindung vorzugsweise durch den Einsatz eines weissen, weitgehend dimensionsstabilen, einseitig silikonisierten oder PE-beschichteten Trägerpapiers mit einem Flächengewicht von ca. 140 g/m² sowie durch den Einsatz eines pastösen PVC-Mischpolymerisats als physikalisch trocknende Version der Farbschicht (Ziffer 3 in Figur 1), die in einem Trockenkanal bei 40-50°C in maximal 30 bis 50 Sekunden stapelfest trocknet, oder in der UV-härtbaren Version durch den Einsatz eines pigmentierten Urethan-Acrylatharz-Systems, das in einem UV-Trockenkanal nach maximal 0,5 bis 3 Sekunden stapelfest trocknet.

Anschliessend wird auf eine oder mehrere Farbschichten eine Kleberschicht (Ziffer 2 in Figur 1) aufgetragen, die vorzugsweise aus einer wässrigen Acrylat-Dispersion mit einem Schälwert von 26,7-42,5 cN/mm (6,8-10,8 N/inch) und einem Tack-Wert von 650-850 g (Polyken Tack-Tester) besteht und die im Trockenkanal bei 40-50°C in maximal 90 Sekunden stapelfest trocknet. Auf die Kleberschicht wird schliesslich ein vorzugsweise weisses und einseitig silikonisiertes oder PE-beschichtetes Schutzpapier (Ziffer 1 in Figur 1) mit einem Flächengewicht von ca. 80-90 g/m² aufgelegt, das mit der Kleberschicht selbsttätig und ausreichend für Transport, Lagerung und Handhabung verhaftet.

In der Praxis hat sich als Farbschicht eine bunte, deckende pastösdickflüssige Farbe, wie sie auf Blatt 5 und 10 beschrieben ist, bewährt. Bei der Firma WIEDERHOLD SIEBDRUCKFARBEN COATES BROTHERS GMBH in D-8500 Nürnberg hat sie die Bezeichnung LAB-N-211260.

Ebenso bewährt haben sich der wässrige Dispersionskleber D 146/3 bzw. die schneller trocknende Sorte D 146, die von der Firma KISSEL & WOLF GMBH in D-6908 Wiesloch erhältlich sind.

Für das Träger- und Schutzpapier sind die zuvor beschriebenen Schäl- bzw. Trennwerte wesentlich. Geliefert werden das Trägerpapier als Sorte 20.209 und das Schutzpapier als Sorten 20.084 bzw. 20.089 von der Firma SCHLEIPEN & ERKENS PAPIERVEREDLUNG GMBH in D-5170 Jülich.

Um das Anwenden und Positionieren bzw. Justieren der Anreibebilder auf den vorgesehenen Untergrundmaterialien, zum Beispiel einer Schaufensterscheibe, zu erleichtern, kann auf der, ggf. nichtbeschichteten, Rückseite des Trägerpapiers eine Anwendungsanleitung aufgedruckt sein und auf der, ggf. nichtbeschichteten, Rückseite des Schutzpapiers in feinen Linien und in zum Beispiel netzartiger oder kreisförmiger Darstellungform oder bei grossen Bogenformaten z.B. nur an der Oberkante oder einer Seitenkante ein spezieller Haftkleber (wie z.B. bei "3M Post-it"). Dieser Haftkleber muss hinsichtlich seiner Klebekraft so gewählt sein, dass die einzelnen Anreibebilder noch leicht voneinander trennbar sind und dass die Klebung beim Positionieren auf einer Fensterscheibe mehrmals haftet, bis schliesslich die richtige Position zum Anreiben der Abbildung gefunden worden ist.

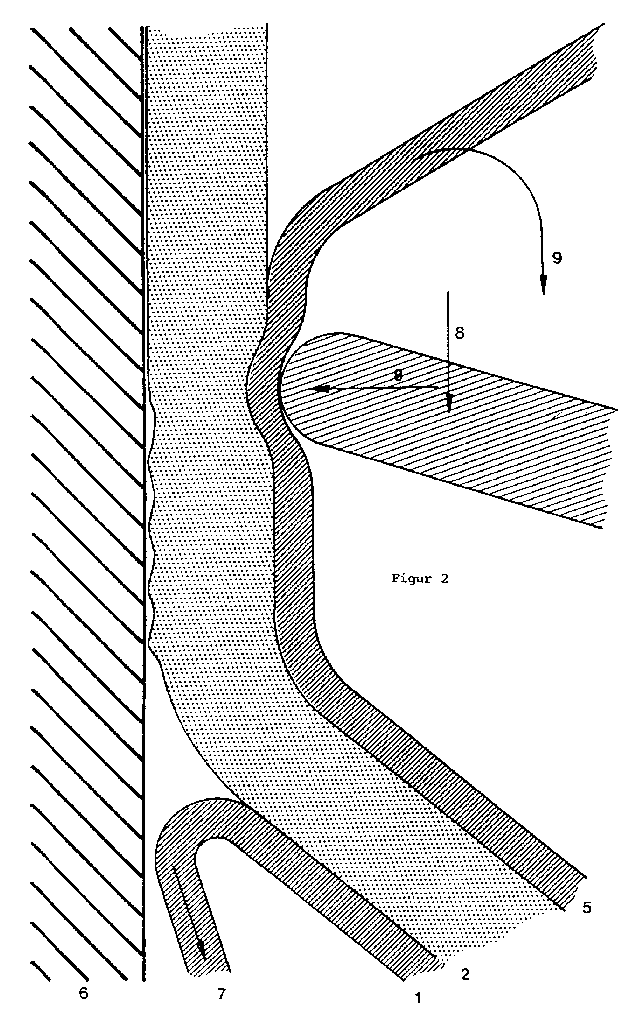

Figur 2 zeigt ein selbstklebendes Anreibebild, in welchem die separate Farbschicht weggelassen worden ist, weil die Kleberschicht (Ziffer 2 in Figur 2) pigmentiert werden kann, oder umgekehrt die Farbschicht durch Einbeziehung eines geeigneten Klebers auch die Kleberfunktion übernommen hat.

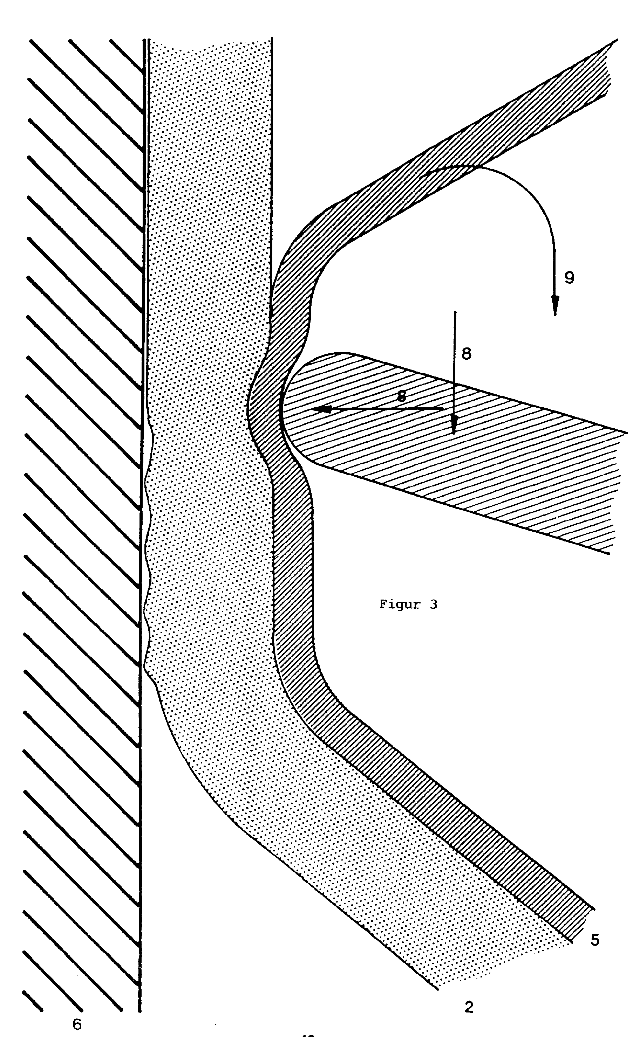

In Figur 3 wird ein selbstklebendes Anreibebild dargestellt, das nur noch aus einem Trägerpapier (Ziffer 5), das auf der Rückseite auch die Schutzpapierfunktion wahrnimmt, und farbigen Kleberschichten (Ziffer 2) bzw. klebrigen Farbschichten besteht. Diese Ausführungsform eignet sich natürlich nicht für Unikate, sondern vornehmlich für grössere Mengen, weil zumindest das oberste Anreibebild mit einem Schutzpapier abgedeckt werden muss, damit es gebrauchsfähig bleibt oder aber, was bei grösseren Mengen unschwer möglich ist, verworfen wird.

Die generellen Vorzüge bei der Verwendung dieser Anreibebilder im Vergleich zu den bekannten Folienmaterialien, wie sie in der EP-A-0043578 beschrieben sind, bestehen darin, dass selbst bei Bildern und Abbildungen, die mit einer geringen Anzahl von bildhaften Einzelelementen, die in einer bestimmten Verteilung erscheinen oder etwa in feinen Linien eine grosse Fläche wie die Schaufenster von Einzelhandelsgeschäften an der Aussen- oder Innenseite überspannen sollen, nur das sichtbar ist, was als Bild oder Abbildung dargestellt sein soll und im übrigen der Einblick in das Schaufenster nicht durch ein zwar "durchsichtiges", aber immer leicht trübes Folienmaterial, ob selbstklebend oder nicht, gestört oder durch Lichtreflexionen behindert wird. Es gibt auch keine überstehenden, den ästhetischen Eindruck störenden Stanzränder sowie keine Materialabfälle wie bei den einen hohen Arbeitsaufwand erfordernden gestanzten oder formgeschnittenen Selbstklebefolien. Ausserdem wird das schwierige und einen beachtlichen Kraftaufwand erfordernde übertragen von Trockenumdruckmaterialien wie bei "Letraset" u.ä. vermieden. Und im Gegensatz zur elektrostatischen Haftfolie bleiben die Anreibebilder beliebig lang mit ihrem Untergrundmaterial verbunden, gleichgültig, wie glatt oder uneben dieses auch sein mag.

Die Anreibebilder können auch auf Untergrundmaterialien mit mässig grober, unebener, konkaver, konvexer oder kugelförmiger oder textiler Oberfläche angerieben werden und verhaften dort beliebig lange und im Gegensatz zu jeder Art von Folienmaterial, das sich aus physikalischen Gründen auf solchen Formen und Materialien entweder gar nicht anbringen lässt oder sich von selbst wieder ablöst. Schliesslich sind die Anreibebilder so elastisch, dass sie sich den üblichen witterungs- oder klimabedingten Veränderungen der Untergrundmaterialien anpassen, ohne zu reissen.

Die folgenden Richtrezepturen für eine physikalisch trocknende und eine ultraviolett härtbare Siebdruckfarbe für selbstklebende Anreibebilder laut Figur 1 sind Beispiele geeigneter Farbrezepturen:

### 1. Richtrezeptur für weisse Siebdruckfarbe, physikalisch trocknend:

Bindemittel-/Pigment-Verhältnis: 1:2
Festkörpergehalt: 64%

|  | Gewichtsanteile: |
|---|---|
| PVC-Polyvinylchlorid-Mischpolymerisat | 24 |
| Titandioxyd | 40 |
| Cyclohexanon | 12 |
| 2-Butoxyethylacetat | 11 |
| Naphta 100 | 13 |
|  | 100 |

Für eine sehr schnell trocknende Version können entsprechende Anteile von Butylacetat als weiteres Lösemittel hinzugefügt werden.

### 2. Richtrezeptur für weisse Siebdruckfarbe, ultraviolett härtbar:

Bindemittel-/Pigmentverhältnis: 3:1
Festkörpergehalt: 89%
Fotoinitiator-Konzentration: 7,5%

| | Gewichtsanteile: |
|---|---|
| Urethan-Acrylatharz | 42,0 |
| Titandioxyd RNCX (oder Zinksulfid-Pigmente) | 21,0 |
| Hexandioldiacrylat | 11,0 |
| Trimethylolpropantriacrylat | 15,0 |
| Aerosil 200 | 1,0 |
| Byk P 104 S | 0,5 |
| Benzophenon | 2,5 |
| Amin | 5,0 |
| Siliconöl L 050 | 2,0 |
| | 100,0 |

Wichtig ist eine gute Abstimmung zwischen Fotoinitiator, Pigment und UV-Strahler.

**Legende zu den Beschreibungs-Zeichnungen**

Figur 1: Ein vierschichtiges selbstklebendes Anreibebild
1 Ein einseitig silikonisiertes oder PE-beschichtetes Schutzpapier
2 Eine Kleberschicht
3 Eine oder mehrere Farbschichten
5 Ein einseitig silikonisiertes oder PE-beschichtetes Trägerpapier
6 Ein Untergrundmaterial, zum Beispiel eine Schaufensterscheibe
7 Abziehen des Schutzpapiers zum Freilegen der Kleberschicht
8 Mit geringem Druck anreiben, um die Kleberschicht komplett mit dem Untergrundmaterial zu verbinden
9 Das Trägerpapier abziehen und damit das Motiv des Anreibebildes sichtbar werden lassen.
Figur 2: Ein dreischichtiges selbstklebendes Anreibebild
1 Ein einseitig silikonisiertes oder PE-beschichtetes Schutzpapier
2 Eine oder mehrere farbige Kleberschichten oder klebrige Farbschichten
5 Ein einseitig silikonisiertes oder PE-beschichtetes Trägerpapier
6, 7, 8 und 9 wie bei Figur 1
Figur 3: Ein zweischichtiges selbstklebendes Anreibebild
2 Eine oder mehrere farbige Kleberschichten oder klebrige Farbschichten
5 Ein auf der zu 2 zugewandten Seite als Trägerfunktion und auf der Rückseite als Schutzfunktion zweiseitig silikonisiertes oder PE-beschichtetes Papier
6, 8 und 9 wie bei Figur 1

**Patentansprüche**

1. Selbstklebendes Anreibebild aus einem Schutzpapier (1), einer Kleberschicht (2), einer oder mehreren Farbschichten (3) und einem Trägerpapier (5) oder einem kombinierten Träger- und Schutzpapier (5), das auf seiner Rückseite (9 in Figur 3) auch die Schutzpapierfunktion (1) wahrnimmt, wobei die Farb- und Kleberschichten (3, 2) in der Flächenform und -ausdehnung des Bildes oder der Abbildung auf das Trägerpapier (5) aufgebracht sind und die Farb- und Kleberschichten (3, 2) untereinander deckungsgleich mit der durch die Farbschicht(en) (3) dargestellten Abbildung sind und wobei Farb- und Kleberschichten (3, 2) auch kombiniert vorliegen können, nämlich als farbige Kleberschicht bzw. klebrige Farbschicht (2 in Figuren 2 und 3), dadurch gekennzeichnet, dass das Trägerpapier (5 gegen 3, 2) einen Trennwert von 50 bis 80 cN, gemessen mit TESA-Band K7476, 20 mm Streifenbreite, Prüfung 24 Stunden bei 40°C, und das Schutzpapier (1 gegen 2) einen ebenso gemessenen Trennwert von 15 bis 35 cN aufweist, dass die, ggf. klebrige, Farbschicht (3) mit einem Trennwert von mindestens 8 cN, gemessen mit TESA-Band T651, 20 mm Streifenbreite, Messbereich 2 N, Abzugsgeschwindigkeit 500 mm/min, am Trägerpapier (5) haftet und dass die Klebekraft der, ggf. farbigen, Kleberschicht(en) bzw. klebrigen Farbschicht(en) (2) so gewählt ist, dass das Schutzpapier (1 bzw. 9 in Figur 3) daran selbsttätig und ausreichend verhaftet, es jedoch beim Abziehen die darunterliegende(n) Schicht(en) (2, 3) nicht vom Trägerpapier (5) ablöst und dass schliesslich die, ggf. farbige, ggf. wasserlösliche, Kleberschicht (2) beständig gegen ultraviolette Strahlung aus Sonnen- und Kunstlicht ist und ihre Funktionsfähigkeit bei Temperaturen von mindestens minus 30°C bis plus 100°C behält.

2. Selbstklebendes Anreibebild nach Anspruch 1., dadurch gekennzeichnet, dass sowohl das Schutzpapier (1) wie auch das Trägerpapier (5) ein dimensionsstabiles und einseitig (gegen 2, 3 in Figuren 1 und 2) oder zweiseitig (5 in Figur 3) silikonisiertes oder PE-beschichtetes Kraftpapier oder Kunststoffpapier, vorzugsweise von jeweils weisser Farbe, ist, wobei auf der, ggf. nicht-beschichteten, Rückseite (9) des Trägerpapiers (5) eine Anwendungsanleitung aufgedruckt ist.

3. Selbstklebendes Anreibebild nach Anspruch 2., dadurch gekennzeichnet, dass auf der nicht-beschichteten Rückseite (7) des Schutzpapiers (1) in feinen Linien und in netzartiger oder kreisförmiger Darstellungsform ein Haftkleber zur Erleichterung der Positionierung des Anreibebildes aufgebracht ist.

4. Selbstklebendes Anreibebild nach einem der Ansprüche 1. bis 3., dadurch gekennzeichnet, dass es als Farbschicht (3) in einer physikalisch getrockneten Version ein pastöses PVC-Mischpolymerisat oder einen anderen und für den Anwendungszweck besser geeigneten Kunststoff mit deckkräftigen organischen bzw. anorganischen Pigmenten aufweist oder in einer ultraviolett gehärteten Version ein pigmentiertes Urethan-Acrylatharz-System.

5. Selbstklebendes Anreibebild nach einem oder mehreren der Ansprüche 1. bis 4., dadurch gekennzeichnet, dass es beim Vorliegen von nur drei Funktionsschichten (Figur 2) aus einem Trägerpapier (5) und einer oder mehreren farbigen Kleberschicht(en) bzw. klebrigen Farbschicht(en) (2) sowie einem Schutzpapier (1) besteht, dagegen beim Vorliegen von nur zwei Funktionsschichten (Figur 3) aus einem zweiseitig beschichteten, kombinierten Träger- und Schutzpapier (5) sowie einer oder mehreren farbigen Kleberschicht(en) bzw. klebrigen Farbschicht(en) (2).

6. Verfahren zur Herstellung des selbstklebenden Anreibebildes nach einem der Ansprüche 1. bis 5., dadurch gekennzeichnet, dass auf ein Trägerpapier (5), ggf. in Bogengrössen von mindestens 140 x 100 cm, mit einer Geschwindigkeit von mindestens 2.000 Bogen je Stunde eine oder mehrere Farbschicht(en) (3) und mit Geschwindigkeiten von mindestens 400, vorzugsweise mindestens 2.000 Bogen je Stunde eine Kleberschicht (2) aufgebracht werden, wobei die Farb- und Kleberschichten (3, 2) in ihrer flächigen Ausdehnung untereinander deckungsgleich mit der durch die Farbschicht(en) (3) dargestellten Abbildung sind, sowie dass schliesslich ein Schutzpapier (1) aufgelegt wird, das mit der darunterliegenden Kleberschicht (2) selbsttätig verklebt.

7. Verfahren zur Herstellung des selbstklebenden Anreibebildes nach den Ansprüchen 6. und 5., dadurch gekennzeichnet, dass auf ein Trägerpapier (5) nur eine oder mehrere farbige Kleberschicht(en) bzw. klebrige Farbschicht(en) (2) aufgebracht und diese durch ein Schutzpapier (1 in Figur 2) abgedeckt werden oder dass ein zweiseitig beschichtetes, kombiniertes Trägerund Schutzpapier (5 in Figur 3) verwendet wird.

## Claims

1. Self-adhesive dry-transfer decal composed of one release paper (1), one adhesive layer (2), one or more color layers (3) and one carrier paper (5), or a combined carrier and release paper (5) which covers on the reverse side (9 in Figure 3) the release paper function (1) as well, whereby color and adhesive layers (3, 2) are applied to the carrier paper (5) in outline and extent of picture or image being reproduced, and color and adhesive layers (3, 2) are congruent among one another with the image being reproduced by the color layer(s) (3), and whereby color layer (3) and adhesive layer (2) may be combined, namely as a colored adhesive layer or an adhesive color layer (2 in Figure 2 and 3), characterized by the fact that the carrier paper (5 towards 3, 2) owns a release value of 50 to 80 cN, measured with TESA-tape K7476, 20 mm width, tested for 24 hours at 40°C, and that the release paper (1 towards 2) owns, measured as above, a release value of 15 to 35 cN, and that the, if applicable adhesive, color layer (3) adheres to the carrier paper (5) with a release value of minimal 8 cN, measured with TESA-tape T651, 20 mm width, measure range 2 N, tear-off speed 500 mm/min, and the adhesion power of the, if applicable colored, adhesive layer(s) (2) or adhesive color layer(s) (3) are selected such that the release paper (1, or 9 in Figure 3) sticks to it automatically and sufficiently, yet when pulled off does not remove any of the underlying layers (2, 3) from the carrier paper (5), and finally that the, if applicable colored, if applicable watersoluble, adhesive layer (2) is resistant against ultraviolet radiation from sun or artificial light, and maintains its functioning within a temperature range of minus 30°C to plus 100°C.

2. Self-adhesive dry-transfer decal as in claim 1, characterized by the fact that the release (1) and carrier paper (5) are each, or if applicable a combined carrier and release paper (5 in Figure 3) is, a dimensionally stable, and on only one side (1 and 5 towards 2, 3), or on both sides (5 in Figure 3), siliconized or PE-coated kraft paper or plastic paper, each preferably of white color, whereby on the reverse side (9) of the carrier paper (5) an instruction for use is imprinted.

3. Self-adhesive dry-transfer decal as in claim 2, characterized by the fact that a bonding adhesive has been applied to the reverse side (7) of the release paper (1) in fine lines and in criss-cross or circular manner, in order to ease positioning of the dry-transfer decal.

4. Self-adhesive dry-transfer decal as in claims 1 to 3, characterized by the fact that the color layer (3) in its physically drying version is a paste-like PVC-polymer-mixture, or another more appropriate plastic, with highly covering organic or anorganic pigments, or in its ultraviolet hardenable version is a pigmented urethane acrylate resin system.

5. Self-adhesive dry-transfer decal as in one or more of claims 1 to 4, characterized by the fact that in the version of only three function layers (Figure 2) it is consisting of one carrier paper (5) and one or more colored adhesive layer(s) or adhesive color layer(s) (2), and one release paper (1), or in the version of only two function layers (Figure 3) it is consisting of a combined and on both sides coated carrier and release paper (5), and one or more colored adhesive layer(s) or adhesive color layer(s) (2).

6. Process for manufacturing a self-adhesive dry-transfer decal as in one of claims 1 to 5, characterized by the fact that on a carrier paper (5), if applicable in sheet sizes of minimal 140 x 100 cm, at a speed of minimal 2,000 sheets per hour one or more color layer(s) (3), and at a speed of minimal 400, preferably of minimal 2,000, sheets per hour one adhesive layer (2) are applied, whereby the color and adhesive layers (3, 2) are congruent among one another in outline with the image reproduced by the color layer(s) (3), and finally a release paper (1) is laid on which adheres by itself to the underlying adhesive layer (2).

7. Process as in claim 6 for manufacturing a self-adhesive dry-transfer decal as in claims 1 and 5 , characterized by the fact that only one or more colored adhesive layer(s) or adhesive color layer(s) (2) are applied to the carrier paper (5), and are covered by a release paper (1 in Figure 2), or a combined carrier and release paper (5 in Figure 3) is used.

**Revendications**

1. Image à transfert auto-adhésive composée d'un papier protecteur (1), d'une couche de colle (2), d'une ou de plusieurs couches de couleur (3) et d'un papier support (5) ou d'un papier support et protecteur combiné (4) qui, sur sa face arrière (9 sur la figure 3), assure également la fonction de papier protecteur, les couches de couleur et de colle (3, 2) étant déposées sur le papier support (5) dans la forme et l'étendue de surface de l'image ou de la reproduction et les couches de couleur et de colle (3, 2) étant en superposition entre elles et avec la reproduction représentée par la ou les couche(s) de couleur (3), et les couches de couleur et de colle (3, 2) pouvant aussi se présenter sous forme combinée, à savoir sous la forme d'une couche de colle colorée ou d'une couche de couleur adhésive (2 sur les figures 2 et 3), caractérisée en ce que le papier support (5 appliqué sur 3, 2) présente une force de décollement de 50 à 80 cN, mesurée avec un ruban TESA K7476 de 20 mm de largeur de bande, essai pendant 24 heures à 40°C, et le papier protecteur (1 appliqué sur 2) présentant une force de décollement de 15 à 35 cN mesurée de la même façon, en ce que la couche de couleur, éventuellement adhésive (3) adhère sur le papier support (5) avec une force de décollement d'au moins 8 cN. mesurée avec un ruban TESA T651 de 20 mm de largeur de bande, plage de mesure 2 N, vitesse d'arrachage 500 mm/min, et en ce que la force adhésive de la ou des couche(s) adhésive(s) éventuellement colorée(s) ou de la ou des couche(s) de couleur (2) éventuellement adhésive(s) est choisie de manière que le papier protecteur (1 ou 9 sur la figure 3) y adhère spontanément et suffisamment mais que, lorsqu'on arrache la ou les couche(s) sous-jacente(s) (2, 3), il ne se détache pas du papier support (5) et que, finalement, la couche adhésive, éventuellement colorée, éventuellement soluble dans l'eau est résistante aux rayonnements ultraviolets de la lumière solaire et d'une lumière artificielle et que son aptitude au fonctionnement reste conservée à des températures d'au moins -30°C à +100°C.

2. Image à transfert auto-adhésive selon la revendication 1, caractérisée en ce qu'aussi bien le papier protecteur (1) que le papier support (5) sont un papier Kraft ou un papier synthétique, de préférence de couleur blanche dans chaque cas, d'une bonne stabilité dimensionnelle et siliconé ou revêtu de PE sur une face (appliquée sur 2, 3 sur les figures 1 et 2) ou sur les deux faces (5 appliquée sur la figure 3), cependant qu'une instruction d'emploi est imprimée sur le dos (9), éventuellement non revêtu, du papier support (5).

3. Image à transfert auto-adhésive selon la revendication 2, caractérisée en ce qu'une substance auto-adhésive destinée à faciliter le positionnement de l'image de transfert est déposée sur le dos (7) non revêtu du papier support (1) en lignes fines, selon un dessin quadrillé ou en cercles.

4. Image de transfert auto-adhésive selon une des revendications 1 à 3, caractérisée en ce qu'elle présente comme couche de couleur (3), soit, dans une version séchée physiquement, un polymérisat mixte pâteux de PVC ou une autre matière synthétique, mieux appropriée pour l'application, qui contient des pigments couvrants, organiques ou inorganiques, soit, dans une version durcie par les ultraviolets, un système de résine uréthaneacrylate pigmenté.

5. Image de transfert auto-adhésive selon une ou plusieurs des revendications 1 à 4, caractérisée en ce que, dans le cas où elle ne comporte que trois couches fonctionnelles (figure 2), elle est composée d'un papier support (5) et d'une ou de plusieurs couche(s) adhésive(s) colorée(s), ou couche(s) de couleur adhésive(s) (2), ainsi que d'un papier protecteur (1) tandis que, lorsqu'elle ne comporte que deux couches fonctionnelles (figure 3), elle est composée d'un papier support et protecteur combiné (5), revêtu sur les deux faces, ainsi que d'une ou plusieurs couche(s) de colle colorée(s) ou couche(s) de couleur adhésive(s) (2).

6. Procédé de fabrication d'une image à transfert auto-adhésive selon une des revendications 1 à 5, caractérisé en ce que, sur un papier support (5), on dépose, éventuellement dans des formats de feuilles d'au moins 140 x 100 cm, une ou plusieurs couche(s) de couleur (3) avec une vitesse d'au moins 2 000 feuilles par heure, et une couche de colle (2) avec des vitesses d'au moins 400, de préférence d'au moins 2 000 feuilles par heure, les couches de couleur et de colle (3, 2) étant, dans leur extension en surface, en superposition entre elles et avec l'image représentée par la ou les couche(s) de couleur (3) et en ce que, finalement, on pose un papier protecteur (1) qui se colle spontanément à la couche de colle (2) sous-jacente.

7. Procédé de fabrication d'une image à transfert auto-adhésive selon les revendications o et 5, caractérisé en ce que, sur un papier support (5), on dépose seulement une ou plusieurs couche(s) de colle colorée(s) ou une ou plusieurs couche(s) de couleur adhésive(s) (2), et on les recouvre d'un papier protecteur (1 sur la figure 2) ou qu'on utilise un papier support et protecteur combiné (5 sur la figure 3) revêtu sur les deux faces.

Figur 1

Figur 2

Figur 3